# EUROPÄISCHE PATENTSCHRIFT

(11) **EP 0 462 660 B1**
(45) Veröffentlichungstag und Bekanntmachung des Hinweises auf die Patenterteilung: **20.12.1995**
(21) Anmeldenummer: 91201477.6
(22) Anmeldetag: 14.06.1991
(51) Int. Cl.: G11B 15/22, F16D 49/20

(54) **Magnetbandgerät**
Magnetic-tape apparatus
Appareil à bande magnétique

(30) Priorität: 21.06.1990 AT 1325/90
(43) Veröffentlichungstag der Anmeldung: 27.12.1991
(73) Patentinhaber: Philips Electronics N.V., 5621 BA Eindhoven (NL)
(72) Erfinder: Ruyten, Henricus, NL-5656 AA Eindhoven (NL); Landbauer, Peter, NL-5656 AA Eindhoven (NL)
(74) Vertreter: Cuppens, Hubertus Martinus Maria

(56) Entgegenhaltungen:
- DE-A- 3 629 324
- PATENT ABSTRACTS OF JAPAN, unexamined applications, P Field, Band 13, Nr. 397,5. September 1989 THE PATENT OFFICE JAPANESE GOVERNMENT Seite 84 P 928

## Beschreibung

Die Erfindung bezieht sich auf ein Magnetbandgerät mit einer zum Antreiben des Magnetbandes vorgesehenen Antriebseinrichtung, die mindestens eine in entgegengesetzten Drehrichtungen in Rotation versetzbare Bremsscheibe enthält, und mit einer zum Abbremsen der Bremsscheibe vorgesehenen Backenbremseinrichtung, die eine zum reibungsschlüssigen Zusammenwirken mit der Bremsscheibe vorgesehene Bremsbacke aufweist, die an einem ersten Hebel vorgesehen ist, der gelenkig mit einem zweiten Hebel verbunden ist, der um ein Schwenklager verschwenkbar ist, wobei zwischen den beiden Hebeln eine beim Abbremsen bei einer Drehrichtung der Bremsscheibe formschlüssig wirksame Koppeleinrichtung vorgesehen ist und wobei die beiden Hebel über eine beim Abbremsen bei der anderen Drehrichtung der Bremsscheibe kraftschlüssig wirksame Federeinrichtung miteinander verbunden sind.

Ein solches dem einleitenden Absatz entsprechendes Magnetbandgerät ist aus der DE-AS 1 272 646 bekannt. Bei diesem bekannten Gerät weist die Backenbremseinrichtung eine separate Koppeleinrichtung zwischen den beiden Hebeln auf. Diese separate Koppeleinrichtung ist hierbei durch einen mit dem zweiten Hebel einstückig verbundenen, von demselben seitlich abstehenden Fortsatz gebildet, der mit einem Abschnitt des hierbei L-förmig ausgebildeten ersten Hebels zusammenwirkt. Es sind somit bei dem bekannten Gerät speziell geformte bzw. ausgebildete Hebel erforderlich. Bei dem bekannten Gerät ist weiters zwischen den beiden Hebeln eine separate Federeinrichtung vorgesehen. Diese separate Federeinrichtung ist hierbei durch eine Zugfeder gebildet, die mit ihren Enden in den beiden Hebeln eingehängt ist. Eine solche Zugfeder weist bekanntlich eine lineare Kennlinie auf, das heißt, daß die Federkraft einer Zugfeder im wesentlichen direkt proportional vom Federweg abhängig ist, der aber wiederum von geometrischen Toleranzen in dem durch die beiden Hebel gebildeten Hebelsystem abhängig ist. Dies hat aber zur Folge, daß die Federkraft und das von der Federkraft der Zugfeder abhängige Bremsmoment relativ stark von geometrischen Toleranzen abhängig ist. Weiters ist hinsichtlich einer Zugfeder zu bemerken, daß eine solche Zugfeder an sich hinsichtlich ihrer Federkraft stark toleranzbehaftet ist, so daß die tatsächliche Federkraft relativ stark von einem angegebenen Nominalwert abweichen kann, was ebenfalls hinsichtlich der Erzielung eines bestimmten gewünschten Bremsmomentes nachteilig ist.

Die Erfindung hat sich zur Aufgabe gestellt, die vorstehend angeführten Schwierigkeiten zu vermeiden und bei einem Magnetbandgerät der im einleitenden Absatz angeführten Gattung eine Backenbremseinrichtung mit einer besonders einfachen Ausbildung zu schaffen und dabei mit besonders einfachen Mitteln ein von der Federkraft der Federeinrichtung abhängiges, jedoch von geometrischen Toleranzen praktisch unabhängiges, einem vorgegebenen Wert relativ genau entsprechendes Bremsmoment durch diese Backenbremseinrichtung zu gewährleisten. Hiefür ist die Erfindung dadurch gekennzeichnet, daß zur Bildung der Koppeleinrichtung und der Federeinrichtung ein einziger im wesentlichen in axialer Richtung belasteter Federstab vorgesehen ist, der mit seinen beiden Enden mit den beiden Hebeln verbunden ist. Auf diese Weise ist erreicht, daß der Federstab sowohl die Koppeleinrichtung als auch die Federeinrichtung bildet und somit eine Doppelfunktion erfüllt, was im Hinblick auf eine möglichst einfache Ausbildung der Backenbremseinrichtung und im Hinblick auf eine möglichst preisgünstige Ausbildung des Magnetbandgerätes vorteilhaft ist. Durch das Vorsehen des im wesentlichen in axialer Richtung belasteten Federstabes, der eine Knickfeder bildet und dabei in einem weiten Bereich eine vom Federweg unabhängige, im wesentlichen konstante Federkraft aufweist, die somit praktisch unabhängig von geometrischen Toleranzen im Hebelsystem ist, ist vorteilhafterweise weiters erreicht, daß stets ein von geometrischen Toleranzen unabhängiges, in seinem Wert konstantes, von der Federkraft des Federstabes abhängiges Bremsmoment erreicht wird. Weiters bietet ein derartiger Federstab den Vorteil, daß derselbe an sich hinsichtlich seiner Federkraft relativ toleranzunabhängig ist, was in Bezug auf die Erzielung eines bestimmten Bremsmomentes günstig ist. Das Vorsehen des Federstabes ist somit für ein sicheres, rasches und trotzdem bandschonendes Abbremsen der Bremsscheibe und folglich des Magnetbandes in einem erfindungsgemäßen Magnetbandgerät vorteilhaft.

Der Federstab kann beispielsweise aus Stahl bestehen und mittels Schraubverbindungen mit den beiden Hebeln verbunden sein. Als vorteilhaft hat sich jedoch erwiesen, wenn der Federstab als Kunststoffteil ausgebildet ist. Ein derartiger als Kunststoffteil ausgebildeter Federstab kann in einfacher Weise an seinen freien Enden beispielsweise mit formschlüssig wirksamen Verbindungsfortsätzen versehen sein, die in korrespondierende Verbindungsausnehmungen in den beiden Hebeln eingesetzt werden können.

Als besonders vorteilhaft hat sich erwiesen, wenn die beiden gelenkig miteinander verbundenen Hebel und der mit seinen beiden Enden mit den Hebeln verbundene Federstab zu einem einzigen einstückig ausgebildeten, aus Kunststoff bestehenden Bauteil zusammengefaßt sind. Auf diese Weise wird eine besonders einfache Ausbildung für die Backenbremseinrichtung erhalten.

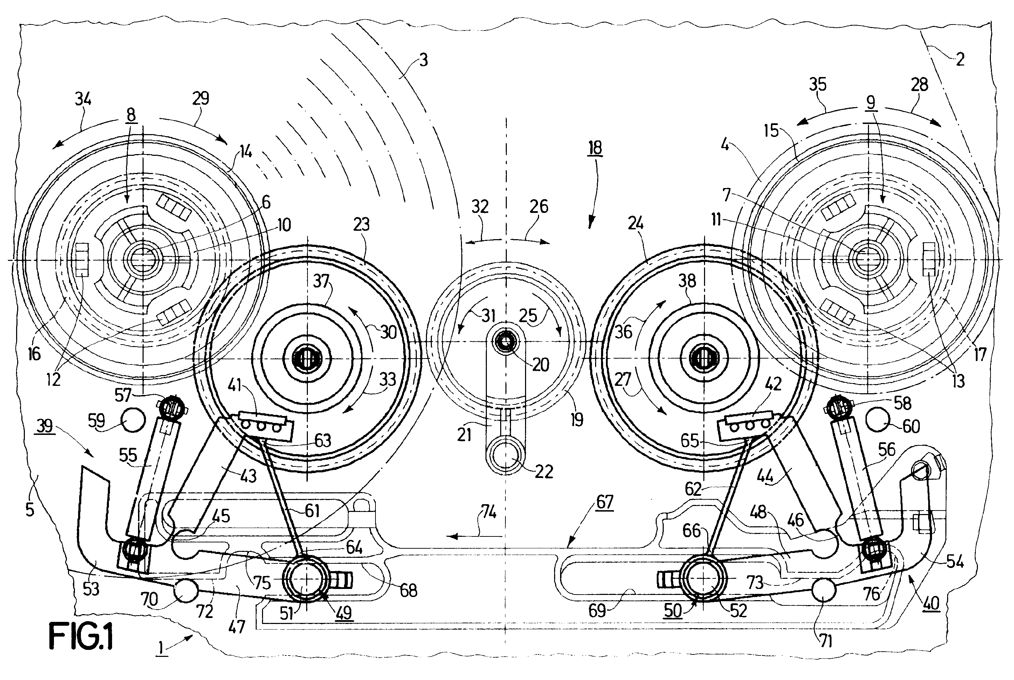

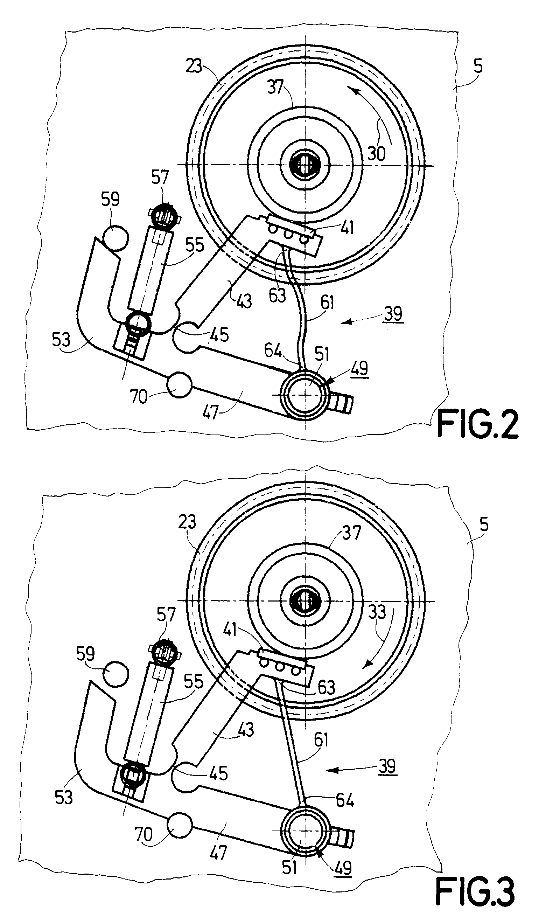

Die Erfindung wird im folgenden anhand eines in den Zeichnungen dargestellten Ausführungsbeispieles näher beschrieben, auf das die Erfindung jedoch nicht beschränkt sein soll. Die Fig.1 zeigt in einem gegenüber der natürlichen Größe größeren Maßstab in Draufsicht einen im Zusammenhang mit der vorliegenden Erfindung wesentlichen Teil eines Magnetbandgerätes mit einer Antriebseinrichtung für das Magnetband, die zwei Bremsscheiben enthält, die zum Abbremsen des Magnetbandes je mit einer Backenbremseinrichtung abbremsbar sind, wobei die beiden Backenbremseinrichtungen in ihrer gelüfteten Ruhelage dargestellt sind. Die Fig.2 zeigt in Draufsicht eine der beiden Backenbremseinrichtungen des Magnetbandgerätes gemäß Fig.1 in ihrer Betriebslage beim Abbremsen der entgegen dem Uhrzeigersinn in Rotation versetzten Bremsscheibe. Die Fig.3 zeigt in Draufsicht die Backenbremseinrichtung gemäß Fig.2 in ihrer Betriebslage beim Abbremsen der im Uhrzeigersinn in Rotation versetzten Bremsscheibe.

Die Fig.1 zeigt einen Teil eines Magnetbandgerätes 1, in das in bekannter Weise eine nicht dargestellte Kassette einsetzbar ist. In der Kassette ist ein Magnetband 2 untergebracht ist, das zwischen zwei Bandwickeln 3 und 4 verläuft, die je auf einer in der nicht dargestellten Kassette untergebrachten Bandspule aufgewickelt sind. Die beiden Bandwickel 3 und 4 des Magnetbandes 2 sind in Fig.1 schematisch mit strichpunktierten Linien angedeutet. Im folgenden ist der Bandwickel 3 als linker Bandwinkel und der Bandwinkel 4 als rechter Bandwinkel bezeichnet.

Das Magnetbandgerät 1 weist ein im wesentlichen plattenförmiges Chassis 5 auf. Auf dem Chassis 5 sind mittels zweier feststehender Wellen 6 und 7 zwei Wickeldorne 8 und 9 zum Antreiben der die beiden Bandwickel 3 und 4 tragenden, in der nicht dargestellten Kassette untergebrachten Bandspulen vorgesehen. Die Wickeldorne 8 und 9 weisen je einen Zentrierteil 10 bzw. 11 zum Zentrieren der Bandspulen und je drei Mitnehmerfortsätze 12 bzw. 13 zum rotierenden Antreiben der Bandspulen und damit der Bandwickel 3 und 4 auf. Die Zentrierteile 10 bzw. 11 und die Mitnehmerfortsätze 12 bzw. 13 stehen von zwei Wickeltellern 14 und 15 ab. Jeder der beiden Wickelteller 14 und 15 ist an seiner Unterseite mit einem Tellerzahnrad 16 bzw. 17 verbunden. Es sei erwähnt, daß der Wickelteller 14 bzw. 15, das Tellerzahnrad 16 bzw. 17 und der Zentrierteil 10 bzw. 11 sowie die Mitnehmerfortsätze 12 bzw. 13 zu einem einstückigen, aus Kunststoff bestehenden Teil zusammengefaßt sind.

Zum Antreiben der beiden Wickeldorne 8 und 9 und damit des Magnetbandes 2 weist das Magnetbandgerät 1 eine nur teilweise dargestellte Antriebseinrichtung 18 auf. Die Antriebseinrichtung 18 enthält einen nicht dargestellten, in seiner Drehrichtung umschaltbaren Motor, von dem über eine ebenfalls nicht dargestellte Antriebsverbindung der Antriebseinrichtung 18 ein in Fig.1 in einer neutralen Mittenlage dargestelltes Antriebszahnrad 19 in entgegengesetzten Drehrichtungen antreibbar ist. Das Antriebszahnrad 19 ist mittels einer Welle 20 auf einem Hebel 21 drehbar gelagert, der mittels eines Wellenstummels 22 am Chassis 5 schwenkbar gelagert ist. Das Antreiben des Antriebszahnrades 19 erfolgt mittels eines nicht dargestellten weiteren Zahnrades der erwähnten Antriebsverbindung, das an der von dem Wellenstummel 22 abgewandten Seite des Antriebszahnrades 19 mit diesem in Eingriff steht.

An dem Hebel 21 ist beispielsweise eine in Fig.1 nicht sichtbare Filzscheibe befestigt, die mit einer Seitenfläche des Antriebszahnrades 19 reibungsschlüssig zusammenwirkt. Auf diese Weise ist erreicht, daß das Antriebszahnrad 19 je nach Drehrichtung desselben automatisch um den Wellenstummel 22 mittels des Hebels 21 verschwenkt wird. Durch das automatische Verschwenken des Antriebszahnrades 19 ist dasselbe wahlweise mit zwei am Chassis 5 drehbar gelagerten Zwischenzahnrädern 23 bzw. 24 in Eingriff bringbar. Das Zwischenzahnrad 23 steht mit dem zum linken Wickeldorn 8 koaxialen Tellerzahnrad 16 und das Zwischenzahnrad 24 steht mit dem zum rechten Wickeldorn 9 koaxialen Tellerzahnrad 17 in Eingriff. Um ein sicheres automatisches Verschwenken des Antriebszahnrades 19 ohne einer wie vorstehend erwähnten Filzscheibe zwischen dem Antriebszahnrad 19 und dem Hebel 21 zu gewährleisten, kann das Antriebszahnrad 19 durch entsprechende Wahl von dessen Kopfkreisdurchmesser auch so ausgebildet sein, daß das Antriebszahnrad 19 beim automatischen Verschwenken desselben zwischen den beiden Zwischenzahnrädern 23 und 24 für einen kurzen Augenblick mit seinen Zähnen mit den Zähnen der beiden Zwischenzahnräder 23 und 24 gleichzeitig in formschlüssigem Eingriff steht und nach abgeschlossenem Verschwenkvorgang das Antriebszahnrad 19 nur mit einem der beiden Zwischenzahnräder 23 und 24 in Eingriff steht.

Wenn das Antriebszahnrad 19 gemäß dem Pfeil 25 im Uhrzeigersinn vom Motor der Antriebseinrichtung 18 her angetrieben wird, dann wird das Antriebszahnrad 19 gemäß dem Pfeil 26 verschwenkt, wobei das Antriebszahnrad 19 mit dem Zwischenzahnrad 24 in Eingriff kommt und dieses in Richtung des Pfeiles 27, also entgegen dem Uhrzeigersinn antreibt. Vom Zwischenzahnrad 24 wird dann das Tellerzahnrad 17 und der Wickelteller 15 und daher auch der rechte Bandwickel 4 gemäß dem Pfeil 28 im Uhrzeigersinn angetrieben. Beispielsweise über das Magnetband 2 wird durch dessen Zugwirkung dann der linke Bandwickel 3 gemäß dem Pfeil 29 ebenfalls im Uhrzeigersinn angetrieben, so daß dann das Tellerzahnrad 16 ebenfalls im Uhrzeigersinn umläuft. Das Tellerzahnrad 16 treibt dabei das Zwischenzahnrad 23 gemäß dem Pfeil 30 entgegen dem Uhr-Zeigersinn an.

Wenn das Antriebszahnrad 19 gemäß dem Pfeil 31 entgegen dem Uhrzeigersinn vom Motor der Antriebseinrichtung 18 her angetrieben wird, dann wird das Antriebszahnrad 19 gemäß dem Pfeil 32 verschwenkt, wobei es mit dem Zwischenzahnrad 23 in Eingriff kommt und dieses in Richtung des Pfeiles 33, also im Uhrzeigersinn antreibt. Vom Zwischenzahnrad 23 wird dann das Tellerzahnrad 16 und der Wickelteller 14 und daher auch der linke Bandwickel 3 gemäß dem Pfeil 34 entgegen dem Uhrzeigersinn angetrieben. Beispielsweise über das Magnetband 2 wird durch dessen Zugwirkung dann der rechte Bandwickel 4 gemäß dem Pfeil 35 ebenfalls entgegen dem Uhrzeigersinn angetrieben, so daß dann das Tellerzahnrad 17 ebenfalls entgegen dem Uhrzeigersinn umläuft. Das Tellerzahnrad 17 treibt dabei das Zwischenzahnrad 24 gemäß dem Pfeil 36 im Uhrzeigersinn an.

Jedes der beiden Zwischenzahnräder 23 und 24 ist mit einer koaxialen Bremsscheibe 37 bzw. 38 einstückig verbunden. Zum Abbremsen jeder der beiden Bremsscheiben 37 und 38 und folglich der Wickeldorne 8 und 9 und der Bandwickel 3 und 4 weist das Magnetbandgerät 1 je eine Backenbremseinrichtung 39 bzw. 40 auf. Die beiden Backenbremseinrichtungen 39 und 40 sind vollkommen identisch ausgebildet, jedoch in spiegelbildlicher Lage zueinander im Magnetbandgerät 1 angeordnet.

Jede der beiden Backenbremseinrichtungen 39 und 40 weist eine zum reibungsschlüssigen Zusammenwirken mit der zugehörigen Bremsscheibe 37 bzw. 38 vorgesehene Bremsbacke 41 bzw. 42 auf. Die Bremsbacke 41 bzw. 42 ist an einem ersten Hebel 43 bzw. 44 vorgesehen. Der erste Hebel 43 bzw. 44 ist über ein als Filmscharnier 45 bzw. 46 ausgebildetes Gelenk mit einem zweiten Hebel 47 bzw. 48 gelenkig verbunden. Der zweite Hebel 47 bzw. 48 ist um ein Schwenklager 49 bzw. 50 verschwenkbar. Das Schwenklager 49 bzw. 50 weist hiebei einen vom zweiten Hebel 47 bzw. 48 abstehenden zylindrischen Wellenstummel 51 bzw. 52 auf, der in einer in Fig.1 nicht sichtbaren Bohrung im Chassis 5 verdrehbar aufgenommen ist.

An dem zweiten Hebel 47 bzw. 48 greift im Bereich seines freien abgewinkelt ausgebildeten Endes 53 bzw. 54 eine als Zugfeder 55 bzw. 56 ausgebildete Feder an, die andererseits an einem vom Chassis 5 abstehenden Fortsatz 57 bzw. 58 eingehängt ist. Die Zugfeder 55 bzw. 56 weist eine relativ kleine Federkraft auf. Beispielsweise kann der Wert ihrer Federkraft etwa 1 bis 2 N betragen. Wie aus den Figuren 2 und 3 für die Backenbremseinrichtung 39 ersichtlich ist, drückt die Zugfeder 55 bzw. 56 beim Abbremsen bei einer Drehrichtung 33 bzw. 27 der Bremsscheibe 37 bzw. 38 über den zweiten Hebel 47 bzw. 48 und den mit diesem gelenkig verbundenen ersten Hebel 43 bzw. 44 die Bremsbacke 41 bzw. 42 gegen die Bremsscheibe 37 bzw. 38 und hält die Zugfeder 55 bzw. 56 beim Abbremsen bei der anderen Drehrichtung 30 bzw. 36 der Bremsscheibe 37 bzw. 38 den zweiten Hebel 47 bzw. 48 an einen vom Chassis 5 abstehenden, stiftförmigen Begrenzungsanschlag 59 bzw. 60 angelegt.

Zwischen den beiden Hebeln 43 und 47 bzw. 44 und 48 ist eine beim Abbremsen bei der einen Drehrichtung 33 bzw. 27 der Bremsscheibe 37 bzw. 38 formschlüssig wirksame Koppeleinrichtung vorgesehen, die beim Abbremsen bei der einen Drehrichtung 33 bzw. 27 der Bremsscheibe 37 bzw. 38 die beiden Hebel 43 und 47 bzw. 44 und 48 zu einem starren, um das Schwenklager 49 bzw. 50 verschwenkbaren Hebelgebilde formschlüssig verbindet. Weiters sind die beiden Hebel 43 und 47 bzw. 44 und 48 über eine beim Abbremsen bei der anderen Drehrichtung 30 bzw. 36 der Bremsscheibe 37 bzw. 38 kraftschlüssig wirksame Federeinrichtung miteinander verbunden, die beim Abbremsen bei der anderen Drehrichtung 30 bzw. 36 der Bremsscheibe 37 bzw. 38 die beiden Hebel 43 und 47 bzw. 44 und 48 kraftschlüssig miteinander verbindet und dabei über den ersten Hebel 43 bzw. 44 die Bremsbacke 41 bzw. 42 gegen die Bremsscheibe 37 bzw. 38 drückt.

In sehr einfacher und vorteilhafter Weise ist bei dem vorliegenden Magnetbandgerät 1 zur Bildung der vorerwähnten Koppeleinrichtung und der vorerwähnten Federeinrichtung bei jeder der beiden Backenbremseinrichtungen 39 und 40 je nur ein einziger im wesentlichen in axialer Richtung belasteter Federstab 61 bzw. 62 vorgesehen, der mit seinen beiden Enden 63 und 64 bzw. 65 und 66 mit den beiden Hebeln 43 und 47 bzw. 44 und 48 verbunden ist. Der Federstab 61 bzw. 62 ist bei axialer Druckbelastung entgegen einer vorgegebenen, durch seine Ausbildung hinsichtlich Querschnitt, Länge und Material festgelegten Knickfederkraft knickbar, die einen vom Federweg praktisch unabhängigen, im wesentlichen konstanten Wert aufweist. Der Federstab 61 bzw. 62 weist eine relativ große Federkraft auf. Beispielsweise kann der Wert seiner Federkraft 20 bis 25 N betragen. Der Federstab 61 bzw. 62 ist hiebei als Kunststoff ausgebildet. In besonders einfacher Weise sind in vorliegendem Fall die beiden über die Filmscharniere 45 bzw. 46 gelenkig miteinander verbundenen Hebel 43 und 47 bzw. 44 und 48 und der mit seinen beiden Enden 63 und 64 bzw. 65 und 66 mit den Hebeln 43 und 47 bzw. 44 und 48 verbundene Federstab 61 bzw. 62 zu einem einzigen einstückig ausgebildeten, aus Kunststoff bestehenden Bauteil zusammengefaßt. Hiebei besteht auch die Bremsbacke 41 bzw. 42 aus Kunststoff, beispielsweise aus einem thermoplastisch verarbeitbaren Elastomer, der gemeinsam mit dem Kunststoff zur Bildung der beiden Hebel 43 und 47 bzw. 44 und 48 und des Federstabes 61 bzw. 62 in einem sogenannten Zwei-Komponenten-Spritzgußverfahren verarbeitet wird.

Die Backenbremseinrichtungen 39 und 40 sind zwischen einer von den Bremsscheiben 37 und 38 gelüfteten Ruhelage, die in Fig.1 dargestellt ist, und einer Betriebslage verstellbar, die für eine der beiden Backenbremseinrichtungen in den Figuren 2 und 3 dargestellt ist, wobei gemäß den Figuren 2 und 3 unterschiedliche Drehrichtungen der abzubremsenden Bremsscheibe vorliegen. Um die Backenbremseinrichtungen 39 und 40 in ihrer Ruhelage zu halten bzw. dieselben zur Verstellung in ihre Betriebslage freizugeben, ist ein Steuerschieber 67 vorgesehen. Der Steuerschieber 67 weist zwei Führungsschlitze 68 und 69 auf, die mit den Wellenstummeln 51 und 52 zusammenwirken, wobei der Steuerschieber 67 von den Wellenstummeln 51 und 52 längsverschiebbar geführt ist. In Fig.1 ist der Steuerschieber 67 in seiner Ausgangslage dargestellt. In dieser Ausgangslage des Steuerschiebers 67 stützt sich je ein von dem zweiten Hebel 47 bzw. 48 der Backenbremseinrichtung 39 bzw. 40 abstehender Steuerstift 70 bzw. 71 an einer Anschlagfläche 72 bzw. 73 des Steuerschiebers 67 unter der Kraftwirkung der an dem zweiten Hebel 47 bzw. 48 angreifenden Zugfeder 55 bzw. 56 ab, wodurch die Backenbremseinrichtungen 39 und 40 in ihrer Ruhelage gehalten sind.

Um die Backenbremseinrichtungen 39 und 40 zur Wirkung zu bringen, also zur Verstellung in ihre Betriebslage freizugeben, wird der Steuerschieber 67 beispielsweise mit Hilfe eines Elektromotors oder auch auf andere Weise aus der in Fig.1 dargestellten Ausgangslage in Richtung des Pfeiles 74 verschoben, und zwar so weit, bis die Steuerstifte 70 und 71 an den zweiten Hebeln 47 und 48 im Bereich von Freistellungen 75 und 76 im Steuerschieber 67 zu liegen kommen, wobei dann die Backenbremseinrichtungen 39 und 40 unter der Wirkung der an den zweiten Hebeln 47 und 48 angreifenden Zugfedern 55 und 56 in ihre Betriebslage verstellt werden.

In Fig.2 ist jene Betriebslage der Backenbremseinrichtung 39 dargestellt, die diese Backenbremseinrichtung 39 einnimmt, wenn sie die in Richtung des Pfeiles 30 in Rotation versetzte Bremsscheibe 37 abbremst. Dies entspricht jener Situation, die beim Abbremsen der Bremsscheibe 37 vorliegt, wenn zuvor das Magnetband 2 vom linken Bandwickel 3 abgewickelt wurde. In diesem Fall wird beim Anlegen der Bremsbacke 41 an die Bremsscheibe 37 die Bremsbacke 41 zuerst der Drehrichtung gemäß dem Pfeil 30 entsprechend reibungsschlüssig mitgenommen. Dabei wird der erste Hebel 43 auf Zug und der Federstab 61 auf Druck beansprucht. Hiedurch wird der Federstab 61 geknickt und dabei die Backenbremseinrichtung 39 so verstellt, daß sich der zweite Hebel 47 derselben unter der Wirkung der Zugfeder 55 mit seinem freien Ende 53 an dem Begrenzungsanschlag 59 abstützt. Durch den geknickten Federstab 61, der hiebei eine kraftschlüssige Verbindung zwischen den beiden Hebeln 43 und 47 bildet, wird die Bremsbacke 41 unter der Federkraft des geknickten Federstabes 61 über den ersten Hebel 43 gegen die Bremsscheibe 37 gedrückt, wobei das Bremsmoment beim Abbremsen der Bremsscheibe 37 bei der mit dem Pfeil 30 angegebenen Drehrichtung derselben von dem hinsichtlich seiner Federkraft relativ stark dimensionierten Federstab 61 abhängig ist. Da die Federkraft des geknickten Federstabes 61 unabhängig vom Federweg stets einen im wesentlichen konstanten, gleichbleibenden Wert aufweist, ist auf diese Weise das von der Federkraft des Federstabes 61 abhängige Bremsmoment stets konstant und von geometrischen Toleranzen praktisch unabhängig. Wie aus Fig. 2 ersichtlich, wirkt bei diesem Bremsvorgang die Bremsbacke 41 mit der Bremsscheibe 37 in nichteinziehender Richtung zusammen, wodurch der Einfluß von Reibwertänderungen auf das Bremsmoment relativ klein ist. Nach erfolgtem Abbremsen der Bremsscheibe 37, wenn sie also zum Stillstand gekommen ist, kehrt der Federstab 61 wieder in seinen gestreckten Zustand zurück, wobei der zweite Hebel 47 vom Begrenzungsanschlag 59 entgegen der Kraft der Zugfeder 55 abhebt. Die Bremseinrichtung 39 nimmt dann dieselbe Position ein, wie sie in Fig.3 dargestellt ist.

In Fig.3 ist jene Betriebslage der Backenbremseinrichtung 39 dargestellt, die diese Backenbremseinrichtung 39 einnimmt, wenn sie die in Richtung des Pfeiles 33 in Rotation versetzte Bremsscheibe 37 abbremst. Dies entspricht jener Situation, die beim Abbremsen der Bremsscheibe 37 vorliegt, wenn zuvor das Magnetband 2 auf den linken Bandwickel 3 aufgewickelt wurde. In diesem Fall wird beim Anlegen der Bremsbacke 41 an die Bremsscheibe 37 die Bremsbacke 41 zuerst der Drehrichtung gemäß dem Pfeil 33 entsprechend reibungsschlüssig mitgenommen, wobei der zwischen den beiden Hebeln 43 und 47 vorgesehene Federstab 61 auf Zug beansprucht wird und als formschlüssige Koppeleinrichtung zwischen den beiden Hebeln 43 und 47 wirksam ist und die beiden Hebel 43 und 47 zu einem starren Hebelgebilde miteinander verbindet, das entgegen der Kraft der Zugfeder 55 um das Schwenklager 49 verschwenkt wird. Dabei ist das von der Bremsbacke 41 auf die Bremsscheibe 37 ausgeübte Bremsmoment der Backenbremseinrichtung 39 von der Federkraft der relativ schwach dimensionierten Zugfeder 55 abhängig. Wie aus Fig.3 ersichtlich, wirkt auch bei diesem Bremsvorgang die Bremsbacke 41 mit der Bremsscheibe 37 in nichteinziehender Richtung zusammen, wodurch auch in diesem Betriebsfall der Einfluß von Reibwertänderungen auf das Bremsmoment relativ klein ist.

## Patentansprüche

1. Magnetbandgerät (1) mit einer zum Antreiben des Magnetbandes (2) vorgesehenen Antriebseinrichtung (18), die mindestens eine in entgegengesetzten Drehrichtungen (30,33,27,36) in Rotation versetzbare Bremsscheibe (37,38) enthält, und mit einer zum Abbremsen der Bremsscheibe vorgesehenen Backenbremseinrichtung (39,40), die eine zum reibungsschlüssigen Zusammenwirken mit der Bremsscheibe vorgesehene Bremsbacke (41,42) aufweist, die an einem ersten Hebel (43,44) vorgesehen ist, der gelenkig mit einem zweiten Hebel (47,48) verbunden ist, der um ein Schwenklager (49,50) verschwenkbar ist, wobei zwischen den beiden Hebeln eine beim Abbremsen bei einer Drehrichtung (33,27) der Bremsscheibe (37,38) formschlüssig wirksame Koppeleinrichtung vorgesehen ist und wobei die beiden Hebel über eine beim Abbremsen bei der anderen Drehrichtung (30,36) der Bremsscheibe (37,38) kraftschlüssig wirksame Federeinrichtung miteinander verbunden sind, dadurch gekennzeichnet, daß zur Bildung der Koppeleinrichtung und der Federeinrichtung ein einziger im wesentlichen in axialer Richtung belasteter Federstab (61,62) vorgesehen ist, der mit seinen beiden Enden (63,64,65,66) mit den beiden Hebeln (43,47,44,48) verbunden ist.

2. Gerät nach Anspruch 1, dadurch gekennzeichnet, daß der Federstab als Kunststoffteil ausgebildet ist.

3. Gerät nach Anspruch 2, dadurch gekennzeichnet, daß die beiden gelenkig miteinander verbundenen Hebel und der mit seinen beiden Enden mit den Hebeln verbundene Federstab zu einem einzigen einstückig ausgebildeten, aus Kunststoff bestehenden Bauteil zusammengefaßt sind.

## Claims

1. A magnetic-tape apparatus (1) comprising a drive arrangement (18) for driving the magnetic tape (2), which arrangement comprises at least one brake disc (37, 38) which is rotatable in opposite directions of rotation (32, 33, 27, 36) and a block-brake device (39, 40) for braking the brake disc, which device comprises a brake block (41, 42) which is adapted to cooperate frictionally with the brake disc and which is arranged on a first lever (43, 44), which first lever is pivotally connected to a second lever (47, 48) which is pivotable about a pivot (49, 50), a coupling means being arranged between the two levers to provide a positive coupling during braking in one direction of rotation (33, 27) of the brake disc (37, 38), and the two levers being interconnected via a spring means to provide a non-positive coupling during braking in the other direction of rotation (32, 36) of the brake disc, characterised in that for forming the coupling means and the spring means there is provided a single spring rod (61, 62) which is loaded substantially axially and which has both ends (63, 64, 65, 66) connected to the two levers (43, 47, 44, 48).

2. An apparatus as claimed in Claim 1, characterised in that the spring rod is constructed as a plastics part.

3. An apparatus as claimed in Claim 3, characterised in that the two pivotally interconnected levers and the spring rod, which has both ends connected to the levers, are combined to form a single one-piece plastics part.

## Revendications

1. Appareil à bande magnétique (1) avec un dispositif d'entraînement (18) prévu pour entraîner la bande magnétique (2), qui comporte au moins un disque de frein (37, 38) qui peut être mis en rotation dans des sens opposés (30, 33, 27, 36) et avec un dispositif de freinage à mâchoire (39, 40) prévu pour freiner le disque de frein, qui comporte une mâchoire de frein (41, 42) prévue pour coopérer par frottement avec le disque de frein, laquelle mâchoire est prévue sur un premier levier (43, 44) qui est relié de manière articulée à un deuxième levier (47, 48), qui peut pivoter autour d'un palier de pivotement (49, 50), étant entendu qu'entre les deux leviers est prévu un dispositif d'accouplement qui agit par épousement de formes lors du freinage du disque de frein (37, 38) dans un premier sens de rotation (33, 27) et que les deux leviers sont reliés l'un à l'autre par l'intermédiaire d'un dispositif à ressort qui agit par transfert de force lors du freinage du disque à frein (37, 38) dans l'autre sens de rotation (30, 36), caractérisé en ce que, pour former le dispositif d'accouplement et le dispositif à ressort, une barrette-ressort (61, 62) unique essentiellement sollicitée dans sa direction axiale est prévue, et reliée par ses deux extrémités (63, 64, 65, 66) aux deux leviers (43, 47, 44, 48).

2. Appareil suivant la revendication 1, caractérisé en ce que la barrette-ressort est réalisée sous la forme d'une pièce en matière plastique.

3. Appareil suivant la revendication 2, caractérisé en ce que les deux leviers reliés l'un à l'autre de manière articulée et la barrette-ressort reliée par ses deux extrémités aux leviers sont regroupés en une pièce unique, d'un seul tenant, en matière plastique.
